# EUROPEAN PATENT APPLICATION

(11) **EP 4 589 963 A1**
(43) Date of publication of application: **23.07.2025**
(21) Application number: 23864770.5
(22) Date of filing: 14.09.2023
(51) Int. Cl.: H04N 21/431, H04N 21/433, G06F 3/04847

(54) **MULTIMEDIA INFORMATION DISPLAY METHOD AND APPARATUS, AND ELECTRONIC DEVICE**

(30) Priority: 14.09.2022 CN 202211117898
(71) Applicant: Beijing Zitiao Network Technology Co., Ltd., Beijing 100190 (CN)
(72) Inventor: WANG, Zuxin, Beijing 100028 (CN); GAO, Xiangyu, Beijing 100028 (CN)
(74) Representative: Dentons UK and Middle East LLP
(86) International application number: PCT/CN2023/118917
(87) International publication number: WO 2024/056040

(57) **Abstract**

Disclosed in embodiments of the present disclosure are a multimedia information display method and apparatus, and an electronic device. A specific implementation of the method comprises: displaying target multimedia information in a multimedia information stream, and displaying a collection display control, wherein the collection display control is configured to indicate a multimedia information collection to which the target multimedia information belongs; displaying an associated multimedia information control for the target multimedia information; in response to detecting a trigger operation on the associated multimedia information control, displaying information content of associated multimedia information, wherein the associated multimedia information indicated by the associated multimedia information control belongs to the multimedia information collection; and in response to detecting a trigger operation on the collection display control, displaying an information identifier for indicating multimedia information in the multimedia information collection.

## Description

### CROSS-REFERENCING OF RELEVANT APPLICATIONS

This application claims the benefit of Chinese patent application No. 202211117898.1, filed on September 14, 2022, entitled "MULTIMEDIA INFORMATION DISPLAY METHOD AND APPARATUS, AND ELECTRONIC DEVICE", which is incorporated herein by reference in its entirety.

### TECHNICAL FIELD

The present disclosure relates to the technical field of computers, and in particular, to a multimedia information display method and apparatus, and an electronic device.

### BACKGROUND

With the development of computers, users can achieve various functions using electronic devices. For example, users can acquire information through multimedia information streams.

Multimedia information streams can also be called feed streams, which can be understood as information outlets and can present content to users in the form of information streams. To connect with others or information, just one action of refreshing is all it takes to get the bulk of required, with constant update.

### SUMMARY

Contents of this disclosure are provided to introduce concepts in a simplified form that are described in detail in the specific implementations that follow. Contents of this disclosure are not intended to identify key features or essential features of the claimed technical solution, nor are they intended to be used to limit the scope of the claimed technical solution.

In a first aspect, provided in an embodiment of the present disclosure is a multimedia information display method, including: displaying target multimedia information in a multimedia information stream, and displaying a selection display control, where the selection display control is configured to indicate a multimedia information selection to which the target multimedia information belongs; displaying an associated multimedia information control for the target multimedia information; in response to detecting a trigger operation on the associated multimedia information control, displaying information content of associated multimedia information, where the associated multimedia information indicated by the associated multimedia information control belongs to the multimedia information selection; and in response to detecting a trigger operation on the selection display control, displaying an information identifier for indicating multimedia information in the multimedia information selection.

In a second aspect, provided in an embodiment of the present disclosure is a multimedia information display apparatus, including: a first display unit, configured to display target multimedia information in a multimedia information stream, and display a selection display control, where the selection display control is configured to indicate a multimedia information selection to which the target multimedia information belongs; a second display unit, configured to display an associated multimedia information control for the target multimedia information; a third display unit, configured to, in response to detecting a trigger operation on the associated multimedia information control, display information content of associated multimedia information, where the associated multimedia information indicated by the associated multimedia information control belongs to the multimedia information selection; and a fourth display unit, configured to, in response to detecting a trigger operation on the selection display control, display an information identifier for indicating multimedia information in the multimedia information selection.

In a third aspect, provided in an embodiment of the present disclosure is an electronic device, including: one or more processors; and a storage apparatus, configured to store one or more programs, when the one or more programs are executed by the one or more processors, the one or more processors implementing the multimedia information display method as claimed in the first aspect.

In a fourth aspect, provided in an embodiment of the present disclosure is a computer-readable medium having a computer program stored thereon, which, when executed by a processor, implements the steps of the multimedia information display method as claimed in the first aspect.

### BRIEF DESCRIPTION OF THE DRAWINGS

The above and other features, advantages and aspects of various embodiments of the present disclosure will become more apparent with reference to the following specific implementations in conjunction with the accompanying drawings. Throughout the accompanying drawings, the same or similar reference numerals refer to the same or similar elements. It is to be understood that the accompanying drawings are schematic and that objects and elements are not necessarily drawn to scale.
Fig. 1 is a flowchart of an embodiment of a multimedia information display method according to the present disclosure;
Figs. 2A, 2B, 2C and 2D are schematic diagrams of an application scenario of the multimedia information display method according to the present disclosure;
Fig. 3 is a schematic diagram of an application scenario of the multimedia information display method according to the present disclosure;
Fig. 4 is a schematic diagram of an application scenario of the multimedia information display method according to the present disclosure;
Fig. 5 is a schematic structural diagram of an embodiment of a multimedia information display apparatus according to the present disclosure;
Fig. 6 is an exemplary system architecture in which the multimedia information display method of an embodiment of the present disclosure can be applied;
Fig. 7 is a schematic diagram of a basic structure of an electronic device provided according to an embodiment of the present disclosure.

### DETAILED DESCRIPTION

Embodiments of the present disclosure will be described in more detail below with reference to the accompanying drawings. Although certain embodiments of the present disclosure are shown in the accompanying drawings, it should be understood that the present disclosure can be implemented in various forms and should not be construed as limited to the embodiments set forth herein. Instead, these embodiments are provided to bring a more thorough and complete understanding of the present disclosure. It should be understood that the accompanying drawings and embodiments of the present disclosure are merely used for illustrative purposes and are not used to limit the scope of protection of the present disclosure.

It should be understood that the various steps described in the method implementations of the present disclosure may be executed in different orders and/or in parallel. Furthermore, method implementations may include additional steps and/or omit performing illustrated steps. The scope of the present disclosure is not limited in this regard.

The term "include" and variations thereof as used herein are open inclusions, i.e., "including but not limited to". The term "based on" means "based at least in part on". The term "one embodiment" means "at least one embodiment"; the term "another embodiment" means "at least one additional embodiment"; the term "some embodiments" means "at least some embodiments". Relevant definitions of other terms are given in the following description.

It needs to be noted that the concepts such as "first" and "second" mentioned in the present disclosure are merely used to distinguish different apparatuses, modules or units, and are not used to limit the order or interdependence of the functions performed by these apparatuses, modules or units.

It needs to be noted that the modifications of "one" and "plurality" mentioned in the present disclosure are illustrative rather than restrictive, and those skilled in the art should understand that unless otherwise clearly indicated in the context, they should be understood as "one or more".

The names of messages or information interacted between a plurality of apparatuses in the implementations of the present disclosure are merely used for illustrative purposes and are not used to limit the scope of these messages or information.

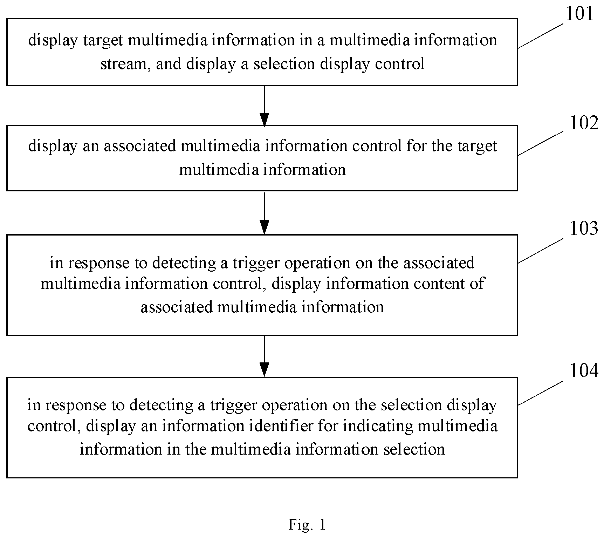

Reference is made to Fig. 1 showing a process of an embodiment of a multimedia information display method according to the present disclosure. As shown in Fig. 1, the multimedia information display method includes the following steps:
Step 101, display target multimedia information in a multimedia information stream, and display a selection display control.

Here, the selection display control is configured to indicate a multimedia information selection to which the target multimedia information belongs.

The target multimedia information in the multimedia information stream is displayed, and an associated multimedia information control is displayed for the target multimedia information.

Here, the multimedia information selection may include one or more pieces of multimedia information. A multimedia selection may be implemented in the form of multimedia streams. The multimedia information stream may include at least two pieces of multimedia information, and the word "stream" characterizes a presentation form in which information is regularly arranged. Multimedia information streams can also be called feed streams, which can be understood as information outlets and can present content to users in the form of information streams. To connect with others or information, just one action of refreshing is all it takes to get the bulk of required, with constant update.

As an example, the multimedia information may include information in at least one of the following forms: text, graphics, images, sounds, movies, and animations.

It needs to be noted that the target multimedia information may be any multimedia information in the multimedia information stream. The word "target" is added here for the convenience of explanation and is not a specific reference.

Step 102, display an associated multimedia information control for the target multimedia information.

Here, the associated multimedia information control can be displayed during the display of the target multimedia information. Associated multimedia information may have an associated relationship with the target multimedia information. Specifically, the target multimedia information and the associated multimedia information indicated by the associated multimedia information control belong to the same multimedia information selection, that is, the associated multimedia information indicated by the associated multimedia information control belongs to the multimedia information selection.

The multimedia information selection here is different from the above multimedia information stream. As an example, a multimedia information selection may include a video A and a video B, which are a first episode and a second episode introducing precautions for feeding puppies. The above multimedia information stream may include the video A and a first video which introduces natural scenery. The video A and the first video may differ in terms of content or publisher, and the relationship between the video A and the first video may merely be that they are arranged in the same multimedia information stream this time.

Step 103, in response to detecting a trigger operation on the associated multimedia information control, display information content of associated multimedia information.

Here, in response to detecting a trigger operation on the associated multimedia information control, information content of the associated multimedia information can be displayed.

As an example, if the user clicks on the associated multimedia information control, the information content of the associated multimedia information can be displayed.

Optionally, the above information content may include screen content of multimedia information
Step 104, in response to detecting a trigger operation on the selection display control, display an information identifier for indicating multimedia information in the multimedia information selection.

The above information identifier may include, but is not limited to, at least one of the following: a title, a cover, and a publisher.

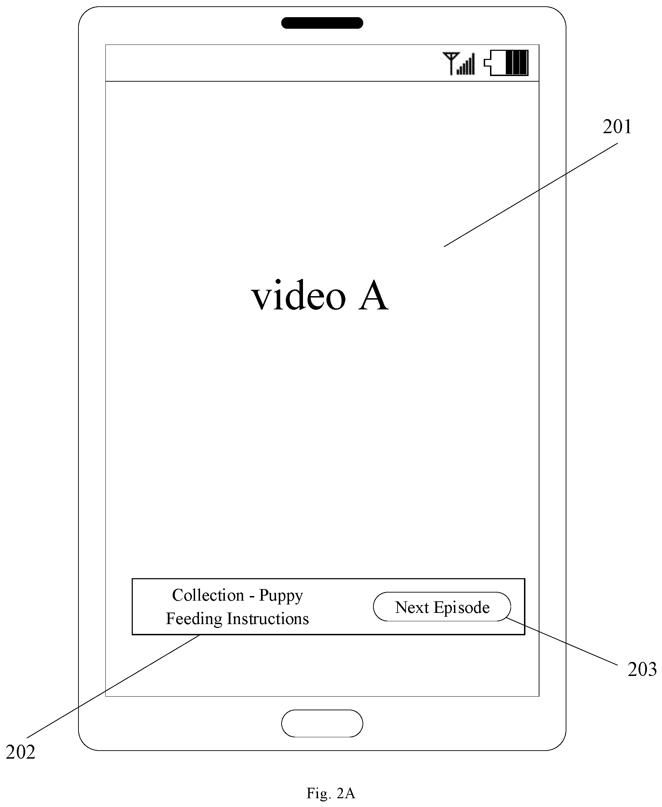

As an example, reference is made to Fig. 2A showing the display of a video A (i.e., target multimedia information) in a display interface 201. The selection display control 202 displayed in the display interface can be configured to indicate a multimedia information selection (i.e., Collection - Puppy Feeding Instructions), and the video A belongs to the multimedia information selection (i.e., Collection - Puppy Feeding Instructions). The associated multimedia information control 203 displayed in the display interface 201 can indicate the associated multimedia information (e.g., video B) associated with the video A in the multimedia information selection (i.e., Collection - Puppy Feeding Instructions).

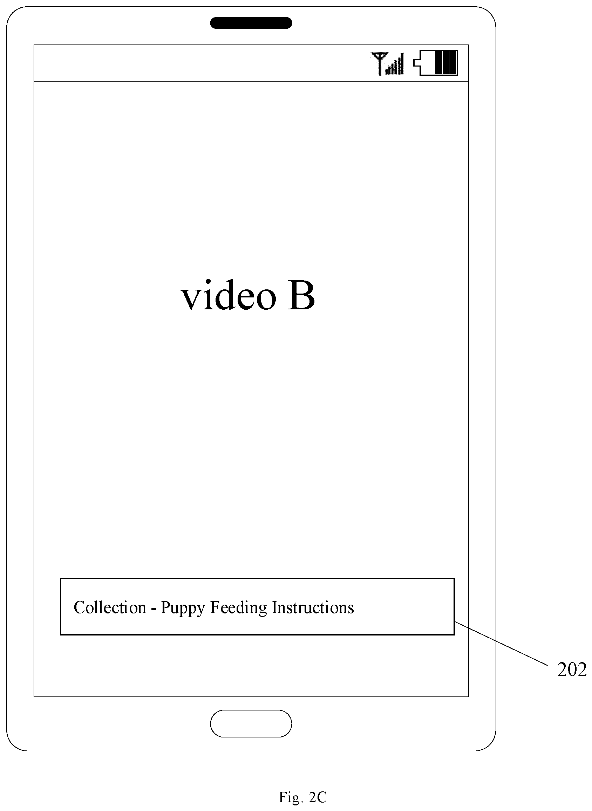

As an example, reference is made to Fig. 2C showing that after the user clicks on the multimedia information control 203 in Fig. 2A, the video B can be displayed in the display interface. The video B belongs to the multimedia information selection (i.e., Collection - Puppy Feeding Instructions).

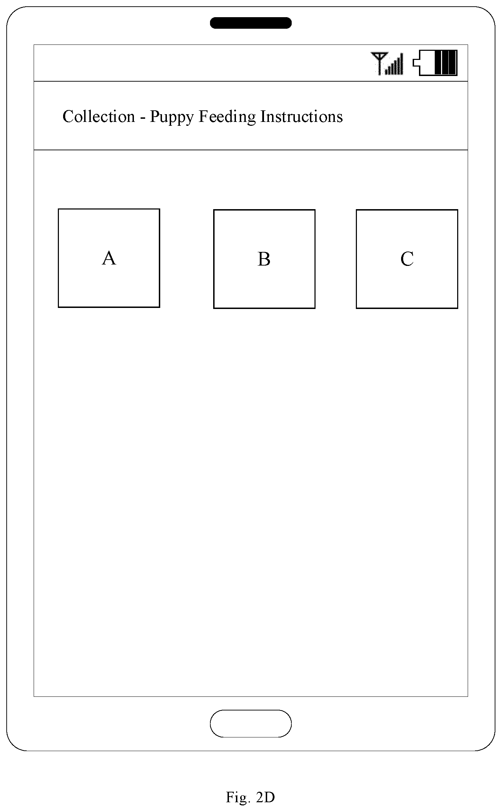

As an example, reference is made to Fig. 2D showing that after the user clicks on the selection display control 202 in Fig. 2A, an information identifier (e.g., title A, title B, title C) of the multimedia information in the multimedia information selection can be displayed in the display interface.

It needs to be noted that, according to the multimedia information display method provided in this embodiment, the selection display control and the associated multimedia information control can be displayed during the display of the multimedia information stream if the target multimedia information being displayed belongs to a multimedia information selection and has associated multimedia information; the user can trigger the selection display control to view the information identifier of the multimedia information in the selection; the user can trigger the associated multimedia information control to display the information content of the multimedia information. Therefore, for a scenario where the target multimedia information belongs to multimedia information, user operation paths can be reduced and the efficiency of the user viewing associated multimedia information can be improved, thereby saving the consumption of computing resources and communication resources.

Specifically, when viewing the target multimedia information belonging to the multimedia information selection, the user already knows that the target multimedia information already exists in a content-related selection due to the prompt of the selection display control, and is likely to expect to view more associated multimedia information in the selection. The method provided in this embodiment enables the user to display information content of associated multimedia information in one operation, avoiding the process of the user first entering the collection to search and then clicking to play (at least two operations), or first entering the publisher's homepage and then clicking to play (at least two operations), thereby improving the efficiency of user operation and reducing the consumption of computing resources and communication resources for displaying collections or publisher homepages.

In contrast, in the related art, the current user can enter multimedia information selection streaming by clicking on the control corresponding to the multimedia information selection, or enter the personal page to operate, but entry and exit interaction paths are long, which will interrupt the user's experience of continuous viewing.

In some embodiments, the method also includes: in response to detecting a first update operation, updating the information content of the multimedia information in the multimedia information stream to the display interface for display.

Here, the above first update operation may be used to update the multimedia information displayed in the display interface.

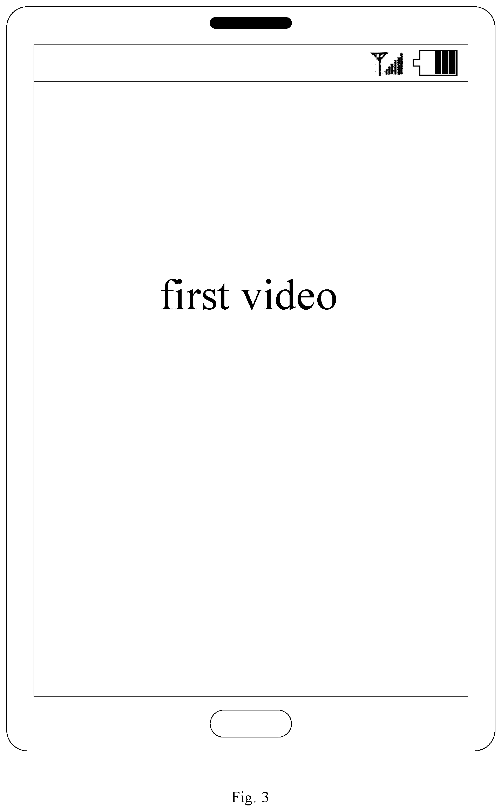

As an example, first update information may include a swipe operation. The multimedia information stream may include a video A and a first video. As an example, referring to Figs. 2A and 3, the user swipes up in Fig. 2A, and the display interface can switch from displaying the video A to displaying the first video (as shown in Fig. 3).

In other words, if the user does not trigger the multimedia information control, the playback logic is that the playback queue continues to use the multimedia information stream, and continues to play the multimedia information in the multimedia information stream in response to the user's first update operation.

It needs to be noted that when the user does not expect to view the associated multimedia information, continuing to display the multimedia information in the multimedia information stream can provide the user with multimedia information other than the multimedia information set, thereby increasing the richness of multimedia information available for the user to choose and displaying multimedia information that meets the user's expectations.

In some embodiments, the method also includes: when displaying the information content of the associated multimedia information, in response to detecting a second update operation, updating the information content of the multimedia information in the multimedia information selection to the display interface for display.

Here, the above second update operation may be used to update the multimedia information displayed in the display interface.

As an example, the second update information may include a swipe operation.

As an example, the multimedia information selection includes a video A, a video B, and a video C. The user triggers the associated multimedia information control to display the video B. When the video B is displayed, in response to detecting a swipe-up operation, the video content of the video C of the multimedia information selection can be displayed.

In other words, after the user triggers the multimedia information control, the playback logic is that the playback queue switches from the multimedia information stream to the multimedia information selection. In response to the user's second update operation, the multimedia information in the multimedia information selection is played.

It needs to be noted that when choosing to display the associated multimedia information, the user may expect to continue viewing other contents in the multimedia information selection. Taking the triggering of the multimedia information control as a node for switching the playback queue can ensure an update operation after the associated multimedia information is displayed, and the multimedia information in the multimedia information selection is continued to play, thereby meeting user needs and saving the user's operation of searching for the content he/she wants to watch.

In some embodiments, there is at least one associated multimedia information control.

As an example, there are two associated multimedia information controls, one marked with the words "Previous Episode" and configured to jump to and display the multimedia information that ranks in front of the target multimedia information in the multimedia information selection, and the other marked with the words "Next Episode" and configured to jump to and display the multimedia information that ranks behind the target multimedia information in the multimedia information selection.

In some embodiments, the associated multimedia information indicated by the at least one associated multimedia information control includes at least one of the following: multimedia information that ranks in front of the target multimedia information in the multimedia information selection; and multimedia information that ranks behind the target multimedia information in the multimedia information selection.

As an example, the multimedia information selection may include a video A, a video B, and a video C. For the video B, the video A is the multimedia information that ranks in front of the video B in the multimedia information selection; the video C is the multimedia information that ranks behind the video B in the multimedia information selection.

Optionally, the rank of the multimedia information in the multimedia information selection may correspond to a number of the multimedia information. The number of the multimedia information may be obtained by the user during the process of generating the multimedia information selection by numbering, or may be obtained by sorting according to an upload time.

It needs to be noted that by displaying the at least one associated multimedia information control, it is possible to provide the user with a path to switch to the at least one associated multimedia information, increasing the richness of selectable multimedia information, quickly providing the user with multimedia information that meets his/her expectations, and minimizing the user's search costs.

In some embodiments, the step in which an associated multimedia information control can be displayed for the target multimedia information includes: in response to a preset display condition being met, displaying the associated multimedia information control.

Here, the preset display condition can be set according to actual application scenarios and is not limited here.

In some embodiments, the preset display condition includes at least one of the following but is not limited to: a first duration between a current time point and a display start time point of the target multimedia information is greater than a first duration threshold; a second duration between the current time point and a display end time point of the target multimedia information is less than a second duration threshold; if an information duration of the target multimedia information is less than a third duration threshold, the target multimedia information starts to be displayed; and the ratio of the first duration between the current time point and the display start time point of the target multimedia information to a duration of the target multimedia information is greater than a preset ratio threshold.

Here, the current time point is between the display start time point and the display end time point.

Optionally, the preset display condition may include that a first duration between a current time point and a display start time point of the target multimedia information is greater than a first duration threshold. As an example, the associated multimedia information control can be displayed 10 seconds after a video is played.

Optionally, the preset display condition may include that a second duration between the current time point and a display end time point of the target multimedia information is less than a second duration threshold. As an example, the associated multimedia information control can be displayed 5 seconds before the end of a video.

Optionally, the preset display condition may include that if an information duration of the target multimedia information is less than a third duration threshold, the target multimedia information starts to be displayed. As an example, if a video is relatively short, for example, the duration of the video is 8 seconds, the associated multimedia information control can be displayed when the video starts playing.

Optionally, the preset display condition may include that the ratio of the first duration between the current time point and the display start time point of the target multimedia information to a duration of the target multimedia information is greater than a preset ratio threshold. As an example, the duration of a video is 1 minute, and the associated multimedia information control can be displayed when the video is played to one third of the duration of the video, that is, at the 20th second.

It needs to be noted that by setting a preset display condition and displaying the associated multimedia information control at the timing indicated by the preset display condition, not only the disturbance to the user can be reduced, but also the user is prompted at an appropriate time. In contrast, if the associated multimedia information control is displayed from the beginning of displaying the target multimedia information, displaying the associated multimedia information control when the user is concentrating on viewing the target multimedia information and has little desire to view other multimedia information may provide information that the user does not need much, resulting in a distraction to the user's attention. In this implementation, the associated multimedia information control is displayed in terms of the timing, which can provide the user with new displayable content when the display needs to be switched, reducing the user's operation of searching for the associated multimedia information.

In some embodiments, an identifier of the multimedia information selection is displayed in a first area of the selection display control, and the associated multimedia information control is displayed in a second area of the selection display control.

As an example, two associated multimedia information controls can be displayed in the second area, one marked with the words "Previous Episode" and the display of the previous episode of the target multimedia information being triggered by clicking on this control, and the other marked with the words "Next Episode" and the display of the next episode of the target multimedia information being triggered by clicking on this control. In this way, an option for the associated multimedia information that the user may be more likely to view can be provided, increasing the probability of satisfying the user's needs.

Here, the second area is configured to trigger the display of information content of the associated multimedia information, and the first area is configured to trigger the display of the information identifier of the multimedia information in the multimedia information selection.

As an example, reference is made to Fig. 2A, in which the selection display control 202 may include a first area and a second area, and the associated multimedia information control 203 is in the second area. The identifier of the multimedia information selection can be displayed in the first area. The user can trigger the display of the information content of the associated multimedia information by clicking on the second area, and can trigger the display of the information identifier of the multimedia information in the multimedia information selection by clicking on the first area in the figure.

It needs to be noted that the associated multimedia information control is partially located in the selection display control, which can not only reduce the disturbance of the associated multimedia information to the user, but also effectively and timely remind the user when the user pays attention to and wants to view the multimedia information in the multimedia information selection.

In some embodiments, step 102 includes: displaying the associated multimedia information control in addition to the selection display control.

Here, cover information, a playback control and title information of the multimedia information selection are displayed on the selection display control.

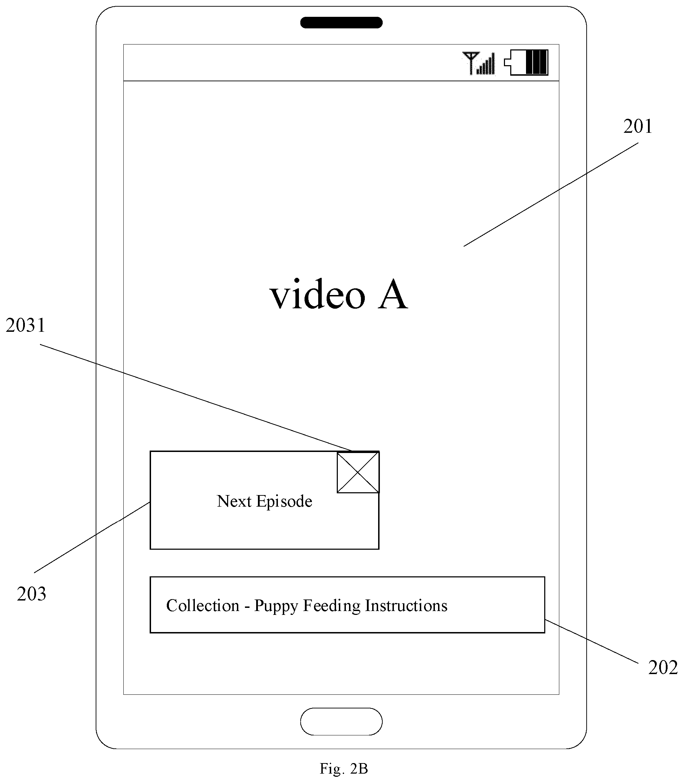

As an example, reference is made to Fig. 2B showing the position of the selection display control 202 in the display interface 201. Areas in the display interface 201 other than the selection display control 202 can be used to display the associated multimedia information control 203.

It needs to be noted that the associated multimedia information control and the selection display control are independent of each other, which can provide stronger prompts to the user. In other words, the user's attention may be drawn to an independent control when it appears in the display interface, thereby providing clearer prompts to the user to allow the user to pay attention to the content prompted by the associated multimedia information control.

In some embodiments, the method also includes: in a third area of the display interface, displaying a page element corresponding to the target multimedia information. The display interface can be configured to display the target multimedia information.

In some embodiments, step 102 includes: in response to the preset display condition being met, stopping displaying the page element corresponding to the target multimedia information and displaying the associated multimedia information control in the third area.

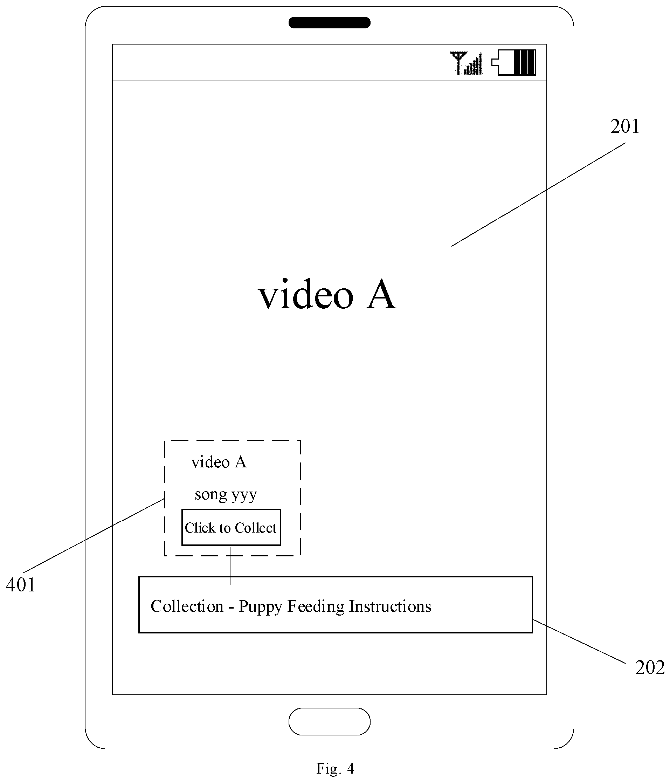

As an example, reference is made to Fig. 4 showing a display interface before the associated multimedia information control is displayed. In the display interface shown in Fig. 4, the title (video A), background music information (song yyy) and interactive control (marked with the words "Click to Collect") are displayed in the second area 402. When the preset display condition is met, the display content in the second area is replaced with the associated multimedia information control 203 from the title (video A), background music information (song yyy) and interactive control (marked with the words "Click to Collect"). Reference is made to Fig. 2B for details.

It needs to be noted that when the preset display condition is met, converting the display area of the page element corresponding to the target multimedia information in the display interface into the display of the associated multimedia information control can provide the user with more useful information for the current time period while keeping the elements in the interface fewer. The fewer the elements in the interface, the cleaner the interface, reducing the disturbance to the user, and reducing the obstruction of multimedia information displayed in the interface. The preset display condition being met can be understood as a more appropriate time to display the associated multimedia information. At this time, the user may be more in need of the prompt provided by the associated multimedia information control rather than the information provided by the replaced content.

In some embodiments, the associated multimedia information control includes a stop display sub-control.

As an example, reference is made to Fig. 2B showing the stop display sub-control 2031.

In some embodiments, the method also includes: in response to detecting a trigger operation on the stop display sub-control, stopping displaying the associated multimedia information control and displaying the page element corresponding to the target multimedia information in the third area.

As an example, when the user clicks on the stop display sub-control 2031 in Fig. 2B, the second area in the display interface 201 can be replaced from displaying the associated multimedia information control 203 to displaying the title (video A), background music information (song yyy) and interactive control (marked with the words "Click to Collect"), i.e., the interface shown in Fig. 4.

It needs to be noted that providing the stop display sub-control is inseparable from the independent display form of the associated multimedia information control 203. The associated multimedia information control 203 is displayed independently of the selection display control, and occupies a larger interface area of the display interface 201. Therefore, when receiving a prompt of the associated multimedia information control 203 and believing that there is no need to use the associated multimedia information control 203, the user can operate the stop display sub-control, thereby avoiding the interference from the associated multimedia information control and improving the display effect of multimedia information.

In some embodiments, the page element corresponding to the target multimedia information includes at least one of the following: a title, background music information, and an interactive control.

In some embodiments, the page element corresponding to the target multimedia information includes at least one of the following: a title, background music information, an interactive control, a user identifier, location information, and an information type.

Here, the location information can jump to display a location-related information interface in response to a user trigger.

Here, the information type can be used to indicate the type of the currently displayed multimedia information.

It needs to be noted that the more the specific items included in the page element corresponding to the target multimedia information, the simpler the display interface after the page element corresponding to the target multimedia information is replaced with the display of the associated multimedia information control, improving the prompt effect of the associated multimedia information. The fewer the specific items included in the page element corresponding to the target multimedia information, the more the interactive entrances that can be retained after the page element corresponding to the target multimedia information is replaced with the display of the associated multimedia information control, so that the user can continue to operate the interactive entrances while receiving the prompt of the associated multimedia information control, implementing the functions provided by the interactive entrances.

In some embodiments, the method also includes: in response to the target multimedia information being the latest information in the multimedia information selection, displaying a prompt message.

Here, the prompt message is configured to prompt that there is no multimedia information in the multimedia information selection whose update time is later than that of the target multimedia information.

As an example, if the currently playing video is the latest episode of a collection, a prompt message can be displayed with the text "Currently the Latest Episode". Clicking on the prompt message can switch to taking the multimedia information selection as the playback queue.

In some embodiments, the method also includes: in response to detecting a trigger operation on the prompt message, displaying an information identifier for indicating multimedia information in the multimedia information selection.

As an example, a collection panel can also be displayed, which may include an information identifier configured to indicate the multimedia information in the multimedia information selection.

It needs to be noted that what is currently displayed is the latest episode of the multimedia information selection, and the user may want to watch the latest episode. Even if being reminded that the latest episode is currently displayed, the user can be avoided searching for the latest episode but failing to find it.

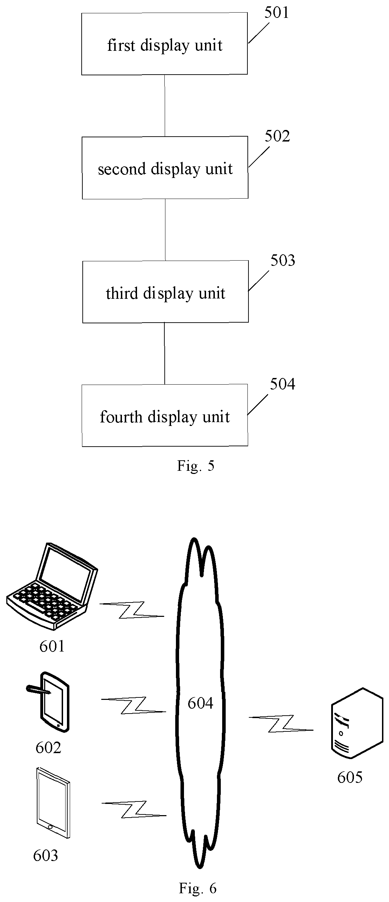

Further referring to Fig. 5, as an implementation of the method shown in the above figures, provided in the present disclosure is an embodiment of a multimedia information display apparatus. The apparatus embodiment corresponds to the method embodiment shown in Fig. 1, and the apparatus can be specifically applied to various electronic devices.

As shown in Fig. 5, the multimedia information display apparatus of this embodiment includes: a first display unit 501, a second display unit 502, a third display unit 503, and a fourth display unit 504. The first display unit is configured to display target multimedia information in a multimedia information stream, and display a selection display control, where the selection display control is configured to indicate a multimedia information selection to which the target multimedia information belongs. The second display unit is configured to display an associated multimedia information control for the target multimedia information. The third display unit is configured to, in response to detecting a trigger operation on the associated multimedia information control, display information content of associated multimedia information, where the associated multimedia information indicated by the associated multimedia information control belongs to the multimedia information selection. The fourth display unit is configured to, in response to detecting a trigger operation on the selection display control, display an information identifier for indicating multimedia information in the multimedia information selection.

In this embodiment, the specific processing of the first display unit 501, the second display unit 502, the third display unit 503 and the fourth display unit 504 of the multimedia information display apparatus and the technical effects brought about thereby can be respectively referred to the relevant descriptions of step 101, step 102, step 103 and step 104 in the corresponding embodiment of Fig. 1, and will not be repeated here.

In some embodiments, the apparatus is also configured to: in response to detecting a first update operation, update the information content of the multimedia information in the multimedia information stream to the display interface for display.

In some embodiments, the apparatus is also configured to: when displaying the information content of the associated multimedia information, in response to detecting a second update operation, update the information content of the multimedia information in the multimedia information selection to the display interface for display.

In some embodiments, the in response to detecting a trigger operation on the associated multimedia information control, displaying information content of associated multimedia information includes: in response to detecting a trigger operation on the associated multimedia control, displaying the target multimedia information and the information content of the associated multimedia information in a display interface synchronously when the target multimedia information has not been completely displayed; and stopping playing the target multimedia information and playing the information content of the associated multimedia information in a display interface when the multimedia information has been played out.

In some embodiments, there is at least one associated multimedia information control, and the associated multimedia information indicated by the at least one associated multimedia information control includes at least one of the following: multimedia information that ranks in front of the target multimedia information in the multimedia information selection; and multimedia information that ranks behind the target multimedia information in the multimedia information selection.

In some embodiments, the displaying an associated multimedia information control for the target multimedia information includes: in response to a preset display condition being met, displaying the associated multimedia information control.

In some embodiments, the preset display condition includes at least one of the following: a first duration between a current time point and a display start time point of the target multimedia information is greater than a first duration threshold; a second duration between the current time point and a display end time point of the target multimedia information is less than a second duration threshold, where the current time point is between the display start time point and the display end time point; if an information duration of the target multimedia information is less than a third duration threshold, the target multimedia information starts to be displayed; and the ratio of the first duration between the current time point and the display start time point of the target multimedia information to a duration of the target multimedia information is greater than a preset ratio threshold.

In some embodiments, an identifier of the multimedia information selection is displayed in a first area of the selection display control, and the associated multimedia information control is displayed in a second area of the selection display control.

In some embodiments, the associated multimedia information control is displayed in addition to the selection display control. Cover information, a playback control and title information of the multimedia information selection are displayed on the selection display control.

In some embodiments, the apparatus is also configured to: display a page element corresponding to the target multimedia information in a third area of a display interface. The displaying an associated multimedia information control for the target multimedia information includes: in response to the preset display condition being met, stopping displaying the page element corresponding to the target multimedia information and displaying the associated multimedia information control in the third area.

In some embodiments, the associating multimedia information control includes a stop display sub-control. The apparatus is also configured to: in response to detecting a trigger operation on the stop display sub-control, stop displaying the associated multimedia information control and display the page element corresponding to the target multimedia information in the third area.

In some embodiments, the page element corresponding to the target multimedia information includes at least one of the following: a title, background music information, and an interactive control; or the page element corresponding to the target multimedia information includes at least one of the following: a title, background music information, an interactive control, a user identifier, location information, and an information type.

In some embodiments, the apparatus is also configured to: in response to the target multimedia information being the latest information in the multimedia information selection, display a prompt message, where the prompt message is configured to prompt that there is no multimedia information in the multimedia information selection whose update time is later than that of the target multimedia information.

In some embodiments, the apparatus is also configured to: in response to detecting a trigger operation on the prompt message, display an information identifier for indicating multimedia information in the multimedia information selection.

Reference is made to Fig. 6 showing an exemplary system architecture in which the multimedia information display method according to an embodiment of the present disclosure can be applied.

As shown in Fig. 6, the system architecture may include terminal devices 601, 602, 603, a network 604, and a server 605. The network 604 is used as a medium to provide a communication link between the terminal devices 601, 602, 603 and the server 605. The network 604 may include various connection types, such as wired, wireless communication links, or fiber optic cables.

The terminal devices 601, 602, 603 may interact with the server 605 via the network 604 to receive or send messages, etc. Various client applications such as web browser applications, search applications and news and information applications can be installed on the terminal devices 601, 602, 603. The client applications in the terminal devices 601, 602, 603 can receive the user's instructions and perform corresponding functions according to the user's instructions, such as adding corresponding information to the information according to the user's instructions.

The terminal devices 601, 602, 603 may be hardware or software. When being hardware, the terminal devices 601, 602, 603 may be various electronic devices with display screens and supporting web browsing, including but not limited to smart phones, tablets, e-book readers, MP3 (Moving Picture Experts Group Audio Layer III) players, MP4 (Moving Picture Experts Group Audio Layer IV) players, laptops, desktops, etc. When being software, the terminal devices 601, 602, 603 may be installed in the electronic devices listed above. The terminal devices 601, 602, 603 can be implemented as a plurality of software or software modules (for example, software or software modules for providing distributed services), or can be implemented as a single software or software module, which is not specifically limited here.

The server 605 may be a server that provides various services, for example, receiving information acquisition requests sent by the terminal devices 601, 602, 603, acquiring display information corresponding to the information acquisition requests in various ways according to the information acquisition requests, and sending the relevant data of the display information to the terminal devices 601, 602, 603.

It needs to be noted that the multimedia information display method provided in an embodiment of the present disclosure may be executed by terminal devices, and accordingly, the multimedia information display apparatus may be provided in the terminal devices 601, 602, 603. In addition, the multimedia information display method provided in an embodiment of the present disclosure may also be executed by the server 605, and accordingly, the multimedia information display apparatus may be provided in the server 605.

It should be understood that the number of terminal devices, networks and servers in Fig. 6 is merely illustrative. Depending on the implementation requirements, there can be any number of terminal devices, networks, and servers.

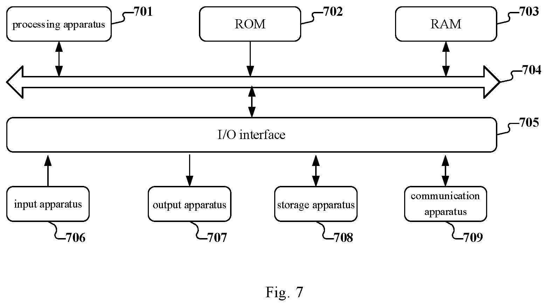

Reference is made below to Fig. 7 showing a schematic structural diagram of an electronic device (e.g., the terminal devices or the server in Fig. 6) suitable for implementing the embodiments of the present disclosure. The terminal devices in the embodiments of the present disclosure may include but are not limited to mobile terminals such as mobile phones, laptops, digital broadcast receivers, PDAs (personal digital assistants), PADs (pads), PMPs (portable multimedia players), and vehicle-mounted terminals (such as vehicle-mounted navigation terminals), as well as fixed terminals such as digital TVs and desktops. The electronic device shown in Fig. 7 is merely an example and should not limit the functions and scope of use of the embodiments of the present disclosure.

As shown in Fig. 7, the electronic device may include a processing apparatus (such as a central processing unit and a graphics processor) 701, which can perform various appropriate actions and processes according to a program stored in a read-only memory (ROM) 702 or a program loaded from a storage apparatus 708 to a random access memory (RAM) 703. In the RAM 703, various programs and data necessary for the operation of the electronic device 700 are also stored. The processing apparatus 701, the ROM 702, and the RAM 703 are connected to each other via a bus 704. An input/output (I/O) interface 705 is also connected to the bus 704.

Typically, the following apparatuses can be connected to the I/O interface 705: input apparatuses 706 including, for example, a touch screen, a touchpad, a keyboard, a mouse, a camera, a microphone, an accelerometer, a gyroscope, etc.; output apparatuses 707 including, for example, a liquid crystal display (LCD), a speaker, a vibrator, etc.; storage apparatuses 708 including, for example, a magnetic tape, a hard disk, etc.; and communication apparatuses 709. The communication apparatuses 709 can allow the electronic device to communicate with other devices in a wireless or wired way to exchange data. Although Fig. 7 shows an electronic device having various apparatuses, it should be understood that it is not required to implement or provide all of the apparatuses shown. More or fewer apparatuses may alternatively be implemented or provided.

In particular, according to the embodiments of the present disclosure, the process described above with reference to the flowchart may be implemented as a computer software program. For example, an embodiment of the present disclosure includes a computer program product including a computer program carried on a non-transitory computer-readable medium, and the computer program contains program code for executing the method shown in the flowchart. In such an embodiment, the computer program can be downloaded and installed from a network via the communication apparatuses 709, or installed from the storage apparatuses 708, or installed from the ROM 702. When executed by the processing apparatus 701, the computer program performs the above functions defined in the method according to an embodiment of the present disclosure.

It needs to be noted that the computer-readable medium mentioned above in the present disclosure may be a computer-readable signal medium or a computer-readable storage medium or any combination of the above two. The computer-readable storage medium may, for example, be, but not limited to, an electronic, magnetic, optical, electromagnetic, infrared, or semiconductor system, apparatus, or device, or any combination of the above. More specific examples of the computer-readable storage medium may include, but are not limited to, an electrical connection having one or more conductors, a portable computer disk, a hard disk, a random access memory (RAM), a read-only memory (ROM), an erasable programmable read-only memory (EPROM or flash memory), optical fibers, a portable compact disk read-only memory (CD-ROM), an optical storage device, a magnetic storage device, or any suitable combination of the above. In the present disclosure, the computer-readable storage medium may be any tangible medium that contains or stores a program for use by or in connection with an instruction execution system, apparatus, or device. In the present disclosure, the computer-readable signal medium may include a data signal propagated in a baseband or as a portion of a carrier wave, in which computer-readable program code is carried. Such a propagated data signal may take a variety of forms, including but not limited to an electromagnetic signal, an optical signal, or any suitable combination of the above. The computer-readable signal medium may also be any computer-readable medium other than the computer-readable storage medium that can send, propagate or transmit a program for use by or in connection with an instruction execution system, apparatus, or device. The program code embodied on the computer-readable medium may be transmitted using any appropriate medium, including but not limited to: wires, optical cables, RF (radio frequency), etc., or any suitable combination of the above.

In some implementations, the client and server can communicate using any currently known or future developed network protocol such as HTTP (HyperText Transfer Protocol), and can be interconnected with any form or medium of digital data communication (e.g., a communication network). Examples of the communication network include a local area network ("LAN"), a wide area network ("WAN"), an internetwork (e.g., the Internet), and a peer-to-peer network (e.g., an ad hoc peer-to-peer network), as well as any currently known or future developed network.

The above computer-readable medium may be included in the above electronic device, or may exist independently without being installed in the electronic device.

The above computer-readable medium carries one or more programs. When the above one or more programs are executed by the electronic device, the electronic device: displays target multimedia information in a multimedia information stream, and displays a selection display control, where the selection display control is configured to indicate a multimedia information selection to which the target multimedia information belongs; displays an associated multimedia information control for the target multimedia information; in response to detecting a trigger operation on the associated multimedia information control, displays information content of associated multimedia information, where the associated multimedia information indicated by the associated multimedia information control belongs to the multimedia information selection; and in response to detecting a trigger operation on the selection display control, displays an information identifier for indicating multimedia information in the multimedia information selection.

In some embodiments, the electronic device is also configured to: in response to detecting a first update operation, update the information content of the multimedia information in the multimedia information stream to the display interface for display.

In some embodiments, the electronic device is also configured to: when displaying the information content of the associated multimedia information, in response to detecting a second update operation, update the information content of the multimedia information in the multimedia information selection to the display interface for display.

In some embodiments, the in response to detecting a trigger operation on the associated multimedia information control, displaying information content of associated multimedia information includes: in response to detecting a trigger operation on the associated multimedia control, displaying the target multimedia information and the information content of the associated multimedia information in a display interface synchronously when the target multimedia information has not been completely displayed; and stopping playing the target multimedia information and playing the information content of the associated multimedia information in a display interface when the multimedia information has been played out.

In some embodiments, there is at least one associated multimedia information control, and the associated multimedia information indicated by the at least one associated multimedia information control includes at least one of the following: multimedia information that ranks in front of the target multimedia information in the multimedia information selection; and multimedia information that ranks behind the target multimedia information in the multimedia information selection.

In some embodiments, the displaying an associated multimedia information control for the target multimedia information includes: in response to a preset display condition being met, displaying the associated multimedia information control.

In some embodiments, the preset display condition includes at least one of the following: a first duration between a current time point and a display start time point of the target multimedia information is greater than a first duration threshold; a second duration between the current time point and a display end time point of the target multimedia information is less than a second duration threshold, where the current time point is between the display start time point and the display end time point; if an information duration of the target multimedia information is less than a third duration threshold, the target multimedia information starts to be displayed; and the ratio of the first duration between the current time point and the display start time point of the target multimedia information to a duration of the target multimedia information is greater than a preset ratio threshold.

In some embodiments, an identifier of the multimedia information selection is displayed in a first area of the selection display control, and the associated multimedia information control is displayed in a second area of the selection display control.

In some embodiments, the associated multimedia information control is displayed in addition to the selection display control. Cover information, a playback control and title information of the multimedia information selection are displayed on the selection display control.

In some embodiments, the electronic device is also configured to: display a page element corresponding to the target multimedia information in a third area of a display interface. The displaying an associated multimedia information control for the target multimedia information includes: in response to the preset display condition being met, stopping displaying the page element corresponding to the target multimedia information and displaying the associated multimedia information control in the third area.

In some embodiments, the associating multimedia information control includes a stop display sub-control. The electronic device is also configured to: in response to detecting a trigger operation on the stop display sub-control, stop displaying the associated multimedia information control and display the page element corresponding to the target multimedia information in the third area.

In some embodiments, the page element corresponding to the target multimedia information includes at least one of the following: a title, background music information, and an interactive control; or the page element corresponding to the target multimedia information includes at least one of the following: a title, background music information, an interactive control, a user identifier, location information, and an information type.

In some embodiments, the electronic device is also configured to: in response to the target multimedia information being the latest information in the multimedia information selection, display a prompt message, where the prompt message is configured to prompt that there is no multimedia information in the multimedia information selection whose update time is later than that of the target multimedia information.

In some embodiments, the electronic device is also configured to: in response to detecting a trigger operation on the prompt message, display an information identifier for indicating multimedia information in the multimedia information selection.

Computer program code for performing operations of the present disclosure may be written in one or more programming languages, or a combination thereof, including but not limited to object-oriented programming languages such as Java, Smalltalk, and C++, as well as conventional procedural programming languages such as "C" or similar programming languages. The program code may execute entirely on the user's computer, partly on the user's computer, as a stand-alone software package, partly on the user's computer and partly on a remote computer, or entirely on the remote computer or server. In cases involving a remote computer, the remote computer may be connected to the user's computer through any type of network, including a local area network (LAN) or a wide area network (WAN), or may be connected to an external computer (e.g., through the Internet using an Internet service provider).

The flowcharts and block diagrams in the accompanying drawings illustrate possibly implemented architectures, functions and operations of systems, methods and computer program products according to various embodiments of the present disclosure. In this regard, each block in the flowcharts or block diagrams may represent a module, a program segment, or a portion of code, which contains one or more executable instructions for implementing specified logical functions. It should also be noted that, in some alternative implementations, the functions noted in the blocks may occur out of the order noted in the accompanying drawings. For example, two blocks shown in succession may actually be executed substantially in parallel, or may sometimes be executed in the reverse order, depending on the functionality involved. It should also be noted that each box in the block diagrams and/or flowcharts as well as combinations of boxes in the block diagrams and/or flowcharts can be implemented by a dedicated hardware-based system that performs specified functions or operations, or can be implemented by a combination of dedicated hardware and computer instructions.

The involved units described in the embodiments of the present disclosure may be implemented by software or by hardware. In some cases, the names of the units do not constitute a limitation on the units themselves. For example, a selection unit may also be described as "a unit for selecting a first type of pixel".

The functions described above herein may be performed at least in part by one or more hardware logic components. For example and without limitation, exemplary types of hardware logic components that may be used include: a field programmable gate array (FPGA), an application specific integrated circuit (ASIC), an application specific standard product (ASSP), a system on chip (SOC), a complex programmable logic device (CPLD), etc.

In the context of the present disclosure, a machine-readable medium may be a tangible medium that can contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of the machine-readable storage medium would include an electrical connection based on one or more wires, a portable computer disk, a hard disk, a random access memory (RAM), a read-only memory (ROM), an erasable programmable read-only memory (EPROM or flash memory), optical fibers, a portable compact disk read-only memory (CD-ROM), an optical storage device, a magnetic storage device, or any suitable combination of the above.

The above description is merely preferred embodiments of the present disclosure and an illustration of the technical principles used. Those skilled in the art should understand that the scope of disclosure involved in the present disclosure is not limited to the technical solution formed by a specific combination of the above technical features, but should also cover other technical solutions formed by any combination of the above technical features or their equivalent features without departing from the above concepts of disclosure, for example, a technical solution formed by the above features replaced with the technical features with similar functions disclosed (but not limited to) in the present disclosure.

In addition, depicting various operations in a particular order should not be understood as requiring such operations be performed in the particular order shown or in a sequential order. Under certain circumstances, multitasking and parallel processing may be advantageous. Likewise, several specific implementation details contained in the above discussion should not be construed as limitations on the scope of the present disclosure. Certain features that are described in the context of separate embodiments can also be implemented in combination in a single embodiment. Conversely, various features that are described in the context of a single embodiment can also be implemented in a plurality of embodiments separately or in any suitable sub-combination.

Although this subject matter has been described in language specific to structural features and/or methodological acts, it should be understood that the subject matter defined in the appended claims is not necessarily limited to the specific features or acts described above. Rather, the specific features and acts described above are merely example forms of implementing the claims.

## Claims

1. A multimedia information display method, **characterized in** comprising:
displaying target multimedia information in a multimedia information stream, and displaying a selection display control, wherein the selection display control is configured to indicate a multimedia information selection to which the target multimedia information belongs;
displaying an associated multimedia information control for the target multimedia information;
in response to detecting a trigger operation on the associated multimedia information control, displaying information content of associated multimedia information, wherein the associated multimedia information indicated by the associated multimedia information control belongs to the multimedia information selection; and
in response to detecting a trigger operation on the selection display control, displaying an information identifier for indicating multimedia information in the multimedia information selection.

2. The method according to claim 1, **characterized in that** there is at least one associated multimedia information control, and the associated multimedia information indicated by the at least one associated multimedia information control comprises at least one of the following:
multimedia information that ranks in front of the target multimedia information in the multimedia information selection; and
multimedia information that ranks behind the target multimedia information in the multimedia information selection.

3. The method according to claim 1, **characterized in that** the displaying an associated multimedia information control for the target multimedia information comprises:
in response to a preset display condition being met, displaying the associated multimedia information control.

4. The method according to claim 3, **characterized in that** the preset display condition comprises at least one of the following:
a first duration between a current time point and a display start time point of the target multimedia information is greater than a first duration threshold;
a second duration between the current time point and a display end time point of the target multimedia information is less than a second duration threshold, wherein the current time point is between the display start time point and the display end time point;
in response to an information duration of the target multimedia information being less than a third duration threshold, the target multimedia information starts to be displayed; and
the ratio of the first duration between the current time point and the display start time point of the target multimedia information to a duration of the target multimedia information is greater than a preset ratio threshold.

5. The method according to claim 1, **characterized in that** an identifier of the multimedia information selection is displayed in a first area of the selection display control, and the associated multimedia information control is displayed in a second area of the selection display control.

6. The method according to claim 1, **characterized in that** the displaying an associated multimedia information control for the target multimedia information comprises:
displaying the associated multimedia information control in addition to the selection display control, wherein cover information, a playback control and title information of the multimedia information selection are displayed on the selection display control.

7. The method according to claim 6, **characterized in** further comprising:
displaying a page element corresponding to the target multimedia information in a third area of a display interface, wherein the display interface is configured to display the target multimedia information; and
the displaying an associated multimedia information control for the target multimedia information comprises:
in response to the preset display condition being met, in the third area, stopping displaying the page element corresponding to the target multimedia information and displaying the associated multimedia information control in the third area.

8. The method according to claim 7, **characterized in that** the associating multimedia information control comprises a stop display sub-control; and
the method further comprises:
in response to detecting a trigger operation on the stop display sub-control, stopping displaying the associated multimedia information control and displaying the page element corresponding to the target multimedia information in the third area.

9. The method according to claim 1, **characterized in** further comprising:
in response to the target multimedia information being the latest information in the multimedia information selection, displaying a prompt message, wherein the prompt message is configured to prompt that there is no multimedia information in the multimedia information selection whose update time is later than that of the target multimedia information.

10. The method according to claim 9, **characterized in** further comprising:
in response to detecting a trigger operation on the prompt message, displaying an information identifier for indicating multimedia information in the multimedia information selection.

11. A multimedia information display apparatus, **characterized in** comprising:
a first display unit, configured to display target multimedia information in a multimedia information stream, and display a selection display control, wherein the selection display control is configured to indicate a multimedia information selection to which the target multimedia information belongs;
a second display unit, configured to display an associated multimedia information control for the target multimedia information;
a third display unit, configured to, in response to detecting a trigger operation on the associated multimedia information control, display information content of associated multimedia information, wherein the associated multimedia information indicated by the associated multimedia information control belongs to the multimedia information selection; and
a fourth display unit, configured to, in response to detecting a trigger operation on the selection display control, display an information identifier for indicating multimedia information in the multimedia information selection.

12. An electronic device, **characterized in** comprising:
one or more processors; and
a storage apparatus, configured to store one or more programs,
when the one or more programs are executed by the one or more processors, the one or more processors implementing the method as claimed in any one of claims 1-10.

13. A computer-readable medium having a computer program stored thereon, **characterized in that** when executed by a processor, the program implements the method as claimed in any one of claims **1-10.**
